# EUROPÄISCHE PATENTANMELDUNG

(11) **EP 4 790 015 A1**
(43) Veröffentlichungstag der Anmeldung: **12.08.2026**
(21) Anmeldenummer: 26157397.6
(22) Anmeldetag: 10.02.2026
(51) Int. Cl.: C01B 3/0094, B01D 53/22, B01D 71/02, B22F 9/22, C01B 3/503, C21B 13/00, C22B 5/12

(54) **VERFAHREN ZUR GEWINNUNG VON ATOMAREM WASSERSTOFF**

(30) Priorität: 10.02.2025 DE 102025104741
(71) Anmelder: Mahnken, Claus-Lüder, 27367 Ahausen (DE); Lorenzen, Johannes Hinrich, 24966 Sörup OT Winderatt (DE)
(72) Erfinder: Mahnken, Claus-Lüder, 27367 Ahausen (DE)
(74) Vertreter: Kröncke, Rolf

(57) **Zusammenfassung**

Die vorliegende Erfindung betrifft ein Verfahren zur Gewinnung von atomarem Wasserstoff aus einem Rohgas. Weiterhin wird atomarer Wasserstoff, erhältlich gemäß dem erfindungsgemäßen Verfahren bereitgestellt. Schließlich ist die vorliegende Erfindung auf ein Verfahren zur Herstellung von elementarem Metall aus einem Metalloxid mit Hilfe von atomarem Wasserstoff gerichtet.

## Beschreibung

Die vorliegende Erfindung betrifft ein Verfahren zur Gewinnung von (re)aktiven atomarem Wasserstoff aus einem Rohgas. Weiterhin wird atomarer Wasserstoff, erhältlich gemäß dem erfindungsgemäßen Verfahren bereitgestellt. Schließlich ist die vorliegende Erfindung auf ein Verfahren zur Herstellung von elementarem Metall aus einem Metalloxid mit Hilfe von atomarem Wasserstoff gerichtet.

### Stand der Technik

Wasserstoff findet als Industriegas vielfältige Anwendungsmöglichkeiten in der Lebensmittel-, Erdöl-, Chemie- und Metall-Industrie. Wasserstoff kann dabei als energetisch stabiler molekularer Wasserstoff (H₂) oder als energetisch weniger stabiler und sehr reaktiver atomarer Wasserstoff (H) vorliegen. Atomarer Wasserstoff ist reaktiver als molekularer Wasserstoff. Reaktionen an denen atomarer Wasserstoff beteiligt ist laufen daher deutlich schneller ab und benötigen weniger Aktivierungsenergie als Reaktionen an denen molekularer Wasserstoff beteiligt ist. Daher ist die Verwendung von atomarem Wasserstoff für die Industrie sehr interessant.

Atomarer Wasserstoff kann durch die Reaktion von Säuren oder Basen mit Metallen gewonnen werden. Molekularer Wasserstoff kann durch die Bestrahlung mit UV-Licht oder durch den Beschuss mit energiereichen Elektronen (10 - 20 Elektronenvolt) in atomaren Wasserstoff gespalten werden. Den Verfahren ist gemein, dass sie einen hohen Energiebedarf und/oder einen hohen apparativen Aufwand für ihre Umsetzung erfordern. Ein immanentes Problem von atomarem Wasserstoff ist die begrenzte Nutzbarkeit hiervon aufgrund der hohen Reaktivität und der damit einhergehenden kurzen Lebensdauer.

Im Stand der Technik sind Verfahren zur Gewinnung von Wasserstoff beschrieben bei denen, zumindest zeitweise, atomarer Wasserstoff entsteht.

Die US 3 407 571A beschreibt eine Vorrichtung zur Separation von Wasserstoff aus einem Wasserstoff-enthaltenden Gemisch mit einem metallischen Wand-Element, das durchlässig für atomaren Wasserstoff und undurchlässig für molekularen Wasserstoff ist und eine Metallschicht auf der Oberfläche des metallischen Wand-Elements, die in der Lage ist molekularen Wasserstoff in atomaren Wasserstoff zu dissoziieren und den dissoziierten Wasserstoff durch die Metallschicht und so durch das metallische Wand-Element zu leiten. Der durch das metallische Wand-Element hindurchgeleitete atomare Wasserstoff rekombiniert sofort zu molekularem Wasserstoff.

Die EP 0 952 957 B1 beschreibt ein Verfahren zur Herstellung von Wasserstoff durch Plasmareforming, wobei das Verfahren ein Plasma-Reformierungsprozess zur Erzeugung einer primären gasförmigen Mischung ist und eine sekundäre gasförmige Mischung umfassend Wasserstoff erzeugt mit anschließender Extraktion des Wasserstoffs aus der sekundären gasförmigen Mischung. In einer Ausführungsform erfolgt die Extraktion des Wasserstoffs mit Hilfe einer Membran, welche eine hohe Selektivität in Hinblick auf den Wasserstoff aufweist.

Atomarer Wasserstoff, der durch Verfahren nach dem Stand der Technik gewonnen wurde, lagert sich jedoch sehr schnell wieder zu molekularem Wasserstoff zusammen (assozieren). Daher ist es nur schwer möglich den gewonnenen atomaren Wasserstoff für chemische Reaktionen nutzbar zu machen.

Verfahren zur Gewinnung von molekularem Wasserstoff sind z.B. aus der DE 10 2012 109 154 A1 bekannt.

Aufgabe der vorliegenden Erfindung ist es daher, ein Verfahren bereitzustellen, dass es ermöglicht atomaren Wasserstoff unter wirtschaftlich interessanten Bedingungen zu gewinnen und für chemische Reaktionen nutzbar zu machen.

### Beschreibung der Erfindung

Die Aufgabe wird durch das Verfahren zur Gewinnung von atomarem Wasserstoff mit den Merkmalen des Anspruchs 1, den atomaren Wasserstoff mit den Merkmalen des Anspruchs 9 und dem Verfahren zum Erhalt von elementarem Metall mit den Merkmalen des Anspruchs 10 gelöst. Vorteilhafte Ausführungen sind in den abhängigen Ansprüchen beschrieben.

In einem ersten Aspekt richtet sich die vorliegende Anmeldung auf ein Verfahren zur Gewinnung von (re)aktiven atomaren Wasserstoff aus einem Rohgas enthaltend molekularen Wasserstoff umfassend die Schritte:
a. Bereitstellen eines Separators mit einer für Wasserstoff semipermeablen Membran aus einem für Wasserstoff durchlässigen Metall oder einer für Wasserstoff durchlässigen Metalllegierung wobei das Metall oder die Metalllegierung Roheisen umfasst, wobei die Membran zwei Reaktionsräume im Separator voneinander trennt;
b. Einleiten des Rohgases enthaltend molekularen Wasserstoff in den ersten Reaktionsraum;
c. Abscheiden von Wasserstoff durch die semipermeable Membran aus dem ersten Reaktionsraum in den zweiten Reaktionsraum, wobei molekularer Wasserstoff aus dem ersten Reaktionsraum durch die Membran in den zweiten Reaktionsraum als atomarer Wasserstoff austritt und dort als atomarer Wasserstoff, insbesondere reaktionsfähiger atomarer Wasserstoff, vorliegt;
d. Gegebenenfalls, Abführen von atomarem Wasserstoff aus dem zweiten Reaktionsraum.

Wasserstoff kann natürlicherweise in verschiedenen Formen vorkommen, zum Beispiel als molekularer Wasserstoff (H₂) oder als atomarer Wasserstoff (H). Molekularer Wasserstoff ist die energetisch stabilste und die unter Standardbedingungen (25 °C und 1,013 bar) am häufigsten vorkommende Form. In dieser Form sind zwei Wasserstoffatome durch eine chemische Bindung miteinander verbunden. Atomarer Wasserstoff ist energetisch weniger stabil und daher reaktiver als molekularer Wasserstoff. In dieser Form liegt ein einzelnes, ungebundenes Wasserstoffatom vor. Atomarer Wasserstoff kann durch die Spaltung der chemischen Bindung aus molekularem Wasserstoff hergestellt werden. Der atomare Wasserstoff auch als naszierender Wasserstoff bezeichnet liegt als ein einzelnes Wasserstoffatom in einem angeregten Zustand vor.

Unter dem Begriff "Rohgas" im Sinne diese Erfindung ist ein Gasgemisch aus Wasserstoff und mindestens einem zweiten Gas zu verstehen. Das Gasgemisch kann auch eine Vielzahl weiterer Gase neben dem Wasserstoff enthalten. Es ist auch möglich, dass das Gasgemisch ein Aerosol enthält. Mögliche Aerosolpartikel können dabei Wasserdampf, Ruß oder Flugasche sein. In einer Ausführungsform ist das Rohgas ein Pyrolysegas aus einem unvollständigen Verbrennungsprozess. Ein derartiges Pyrolysegas kann zum Beispiel bei der unterstöchiometrischen Verbrennung von organischem Material, wie Holzpellets, entstehen. Die wesentlichen Bestandteile eines solchen Pyrolysegases sind Wasserdampf, Wasserstoff, Kohlenstoffmonoxid und -dioxid, sowie Methan. Darüber hinaus kann das Pyrolysegas andere Bestandteile, wie teerartige, ölige und/oder fettige Stoffe enthalten.

In einer Ausführungsform ist das Rohgas ein reformiertes Synthesegas. Ein reformiertes Synthesegas kann durch mindestens eine Reformierungsreaktion, wie mindestens eine Dampfreformierungsreaktion, aus einem Gasgemisch, wie einem Pyrolysegas, hergestellt werden. Bestandteile eines reformierten Synthesegases können Methan, Wasserstoff, Kohlenstoffdioxid, Kohlenstoffmonooxid, und Wasserdampf sein. Durch die Reformierungsreaktion können Bestandteile des Gasgemisches, die kein Kohlenstoffdioxid, Methan, Kohlenstoffmonooxid, Wasserstoff oder Wasserdampf sind, in mindestens einen dieser Stoffe umgewandelt werden. Dem Fachmann sind Methoden zur Reformierung von Gasgemischen bekannt.

In einer Ausführungsform ist das Rohgas ein Gasgemisch aus natürlichem Erdgas und Wasserstoff im Gasnetz der Energieversorgung. Dem Fachmann ist die Zusammensetzung von Erdgas bekannt. Ein Gasgemisch aus Erdgas und Wasserstoff entsteht zum Beispiel, wenn dem Erdgas des Gasnetzes der Energieversorgung Wasserstoff beigemischt wird. Der Wasserstoff kann dabei sogenannter "grüner" Wasserstoff sein, der als Energiespeicher von durch regenerative Energiequellen erzeugter Energie dient. Der Wasserstoff kann so mit dem Erdgas im Gasnetz der Energieversorgung transportiert werden.

Unter "semipermeabler Membran" im Sinne dieser Erfindung, ist eine Membran zu verstehen, die für spezifische Stoffe durchlässig permeabel ist und für andere spezifische Stoffe undurchlässig ist. Man kann auch sagen, dass die Membran selektiv für einen ersten Stoff durchlässig ist und selektiv für einen zweiten Stoff nicht durchlässig ist. Der Stoff kann ein Gas sein und das Stoffgemisch kann ein Gasgemisch sein. Eine semipermeable Membran kann somit für einen ersten gasförmigen Stoff durchlässig sein und für einen zweiten gasförmigen Stoff undurchlässig sein. Eine semipermeable Membran kann auch nur für einen einzelnen ersten gasförmigen Stoff aus einem Gasgemisch durchlässig sein und für alle anderen gasförmigen Stoffe aus einem Gasgemisch nicht durchlässig sein.

Semipermeable Membranen aus für Wasserstoff durchlässigem Eisen oder aus einer für Wasserstoff durchlässigen eisenhaltigen Metalllegierung sind dem Fachmann bekannt. Geeignete eisenhaltige Metalllegierungen, enthalten im wesentlichen Eisen und weitere Metalle in geringen Mengen von bis zu 5 Masseprozent.

Die Verwendung von Membranen aus für Wasserstoff durchlässigen Metall oder aus einer für Wasserstoff durchlässigen Metalllegierung zur Gewinnung von hochreinem Wasserstoff aus einem Gasgemisch sind bekannt. Es wird bisher vermutet, dass dabei der molekulare Wasserstoff an der Oberfläche der Membran zu atomarem Wasserstoff dissoziiert. Dieser atomare Wasserstoff wird von der Membran adsorbiert. Es wird davon ausgegangen, dass sich dabei das Proton des Wasserstoffatoms von dem Elektron trennt. Das Elektron kann sich frei durch das Metallgitter der Membran bewegen und das Proton kann durch das Metallgitter diffundieren. Beim Austritt aus der Membran assoziiert das Proton mit einem Elektron und bildet zunächst atomaren Wasserstoff. Gemäß der bisherigen Lehrmeinung assoziieren zwei atomare Wasserstoffatome unmittelbar nach dem Austritt aus der Membran zu molekularem Wasserstoff. D.h., in Verfahren nach dem Stand der Technik wurde beobachtet, dass sich dieser atomare Wasserstoff beim Austritt aus der Membran sofort zu molekularem Wasserstoff zusammenlagert.

Es hat sich nun jedoch völlig überraschend gezeigt, dass sich mit dem erfindungsgemäßen Verfahren atomarer Wasserstoff gewinnen lässt, der anschließend für chemische Reaktionen verwenden werden kann. Der mit einem erfindungsgemäßen Verfahren gewonnene atomare Wasserstoff wandelte sich nicht unmittelbar in molekularen Wasserstoff um. Es wurde beobachtet, dass chemische Reaktionen, insbesondere die Reduktion von Metalloxiden zu elementarem Metall, an denen der mit dem erfindungsgemäßen Verfahren gewonnene atomare Wasserstoff beteiligt ist, ablaufen. Das erfindungsgemäße Verfahren zur Gewinnung von atomarem Wasserstoff kann einfach und kostengünstig in großem Maßstab umgesetzt werden, da weder ein hoher Energieverbrauch, noch ein hoher apparativer Aufwand zur Umsetzung des Verfahrens erforderlich ist. Dadurch ist das erfindungsgemäße Verfahren hervorragend dazu geeignet, atomaren Wasserstoff unter wirtschaftlich interessanten Bedingungen zu gewinnen.

In einer Ausführungsform des erfindungsgemäßen Verfahrens zur Gewinnung von atomarem Wasserstoff enthält das für Wasserstoff durchlässige Metall Roheisen, bevorzugterweise ferritisches Eisen. In einer Ausführungsform enthält das Metall Reineisen. Ein besonders hoher Eisenanteil ist vorteilhaft für die Durchtrittsrate des Wasserstoffs durch die Membran und somit auch für die Gewinnung von atomarem Wasserstoff. Reineisen weist einen Eisenanteil von mehr als 99,8 % auf.

In einer Ausführungsform des erfindungsgemäßen Verfahrens zur Gewinnung von atomarem Wasserstoff besteht das für Wasserstoff durchlässige Metall aus Roheisen, bevorzugterweise aus ferritischem Eisen. In einer Ausführungsform besteht das Metall aus Reineisen. Es hat sich gezeigt, dass ein besonders hoher Eisenanteil vorteilhaft für die Durchtrittsrate des Wasserstoffs durch die Membran und somit für die Gewinnung von atomarem Wasserstoff ist.

In einer Ausführungsform des erfindungsgemäßen Verfahrens zur Bearbeitung einer semipermeablen Membran weist die gemäß Schritt a) bereitgestellte semipermeable Membran eine strukturierte Oberfläche auf.

Dem Fachmann sind materialabtragende Verfahren zur Bearbeitung von Metallteilen, wie Membranen aus Metall, insbesondere Eisen oder eisenhaltigen Metalllegierungen, bekannt. Ein geeignetes materialabtragendes Verfahren zum Strukturieren der Oberfläche der Membran ist unter anderem das elektrolytische Ätzen mit Bestromung im Elektrolysebad. Das Funkenerodierverfahren ist eine weitere Methode, um oberflächliche Strukturen zu schaffen. In einem Bad mit einem nicht elektrisch leitfähigen, flüssigen Dielektrikum wird dabei eine Elektrode oberhalb der Oberfläche platziert und über eine CNC-Vorrichtung programmgemäß bewegt. Fräs-Verfahren, zum Beispiel CNC-Fräsen, oder Laser-Verfahren sind ebenfalls geeignet. Sandstrahlverfahren sind eine kostengünstige Möglichkeit für die Bearbeitung. Als Strahlmittel kommt neben Korund auch Quarzglas, aber auch Eisenpulver oder Eisengries infrage. Besonders geeignet sind jedoch Ätzverfahren. Ätzverfahren sind kostengünstig und einfach in großem Maßstab durchzuführen. Außerdem können leicht beide Oberflächen der Membran gleichzeitig in einem Arbeitsschritt bearbeitet werden. Als geeignete Verfahren kommen Funkenerodierverfahren, Fräsverfahren, Sandstrahlverfahren oder Ätzverfahren in Frage.

In einer Ausführungsform ist die Oberfläche der Membran mit einem Ätzverfahren strukturiert. Ätzverfahren zur Bearbeitung von Metallteilen sind dem Fachmann bekannt. Dabei wird sich die korrosive Wirkung eines Ätzmittels auf das Metallteil zu Nutze gemacht und die Oberfläche des Metallteils strukturiert.

Es hat sich als vorteilhaft gezeigt, eine Membran mit einer strukturierten Oberfläche zur Beschichtung bereitzustellen, da sich bei einer derartigen Membran die Durchtrittsdicke für den Wasserstoff verringert und die Grenzfläche zwischen dem Rohgas und der Membran und/oder sich die Grenzfläche zwischen dem hochreinen Wasserstoff und der Membran vergrößert. Eine derartige Membran weist eine höhere Durchtrittsrate des Wasserstoffs durch die Membran auf als eine Membran mit einer glatten, nicht strukturierten Oberfläche.

Das Verfahren zur Gewinnung von atomarem Wasserstoff kann weiterhin den Schritt des Speichern des atomaren Wasserstoffs in einem Druckbehälter umfassen. Es hat sich überraschenderweise gezeigt, dass der erfindungsgemäße gewonnene atomare Wasserstoff länger als angenommen stabil ist. So kann dieser atomare Wasserstoff z.B. in Druckbehältern gespeichert werden, wie mindestens einen Tag lang gespeichert, insbesondere wie mehrere Tage lang gespeichert werden. Vorteilhaft daran ist, dass so der in dem erfindungsgemäßen Verfahren gewonnene atomare Wasserstoff nicht sofort für eine chemische Reaktion verwendet werden muss, sondern zunächst gespeichert, wie mindestens einen Tag lang gespeichert, insbesondere wie mehrere Tage lang gespeichert, werden kann und nach Bedarf verwendet wird.

Das Verfahren zur Gewinnung von atomarem Wasserstoff kann weiterhin den Schritt des Beaufschlagens des ersten Reaktionsraums mit einem Überdruck umfassen. Durch das Beaufschlagen des ersten Reaktionsraums mit einem Überdruck erhöht sich die Durchtrittsrate des Wasserstoffs durch die Membran und es wird mehr atomarer Wasserstoff gewonnen. Dies könnte daran liegen, dass der molekulare Wasserstoff aus dem Rohgas durch den Überdruck auf die Oberfläche der Membran gedrückt wird und mehr molekularer Wasserstoff an der Oberfläche der Membran zu atomarem Wasserstoff dissoziiert, der dann von der Membran adsorbiert wird. So entsteht bei Austritt des Protons aus der Membran mehr atomarer Wasserstoff.

Das Verfahren zur Gewinnung von atomarem Wasserstoff kann weiterhin den Schritt des Beaufschlagens des zweiten Reaktionsraums mit einem Unterdruck, insbesondere mit einem Vakuum umfassen. Durch das Beaufschlagen des zweiten Reaktionsraums mit einem Unterdruck erhöht sich die Durchtrittsrate des Wasserstoffs durch die Membran und es wird mehr atomarer Wasserstoff gewonnen. Dies könnte daran liegen, dass der atomare Wasserstoff durch den Unterdruck kontinuierlich aus dem zweiten Reaktionsraum abgezogen wird und sich der Partialdruck des Wasserstoffs in dem zweiten Reaktionsraum verringert. Dadurch kann das Proton einfacher aus der Membran austreten und sich mehr atomarer Wasserstoff bilden.

Das Verfahren zur Gewinnung von atomarem Wasserstoff kann weiterhin den Schritt des zumindest zeitweise, wie zumindest zeitweise zu Beginn des Verfahrens Anlegens einer elektrischen Spannung an die semipermeable Membran umfassen. Es ist bekannt, dass sich durch Anlegen einer elektrischen Spannung an die semipermeable Membran die Durchtrittsrate des Wasserstoffs durch die Membran erhöht. Es hat sich überraschend gezeigt, dass so in dem erfindungsgemäßen Verfahren ebenfalls mehr atomarer Wasserstoff gewonnen werden kann. Das zeitweise, wie zeitweise zu Beginn des Verfahrens, Anlegen einer Spannung erhöht die Durchtrittsrate des Wasserstoffs durch die Membran und es kann gleichzeitig Energie gespart werden, da die Spannung nicht dauerhaft angelegt werden muss.

Das Verfahren zur Gewinnung von atomarem Wasserstoff kann weiterhin den Schritt des Erhitzens der semipermeablen Membran auf eine Temperatur von 400°C bis 1.100°C, wie 500° bis 1.000°C, umfassen. Es ist bekannt, dass durch das Erhitzen der semipermeablen Membran, sich die Durchtrittsrate des Wasserstoffs durch die Membran erhöht. Es hat sich überraschend gezeigt, dass so in dem erfindungsgemäßen Verfahren ebenfalls mehr atomarer Wasserstoff gewonnen werden kann. Das zeitweise, wie zeitweise zu Beginn des Verfahrens, Erhitzen der Membran erhöht die Durchtrittsrate des Wasserstoffs durch die Membran und es kann gleichzeitig Energie gespart werden, da die Membran nicht dauerhaft erhitzt werden muss. Die Membran kann einfach durch elektrische Energie erhitzt werden. Vorteilhaft daran ist, dass so gleichzeitig eine Spannung an die Membran angelegt wird und sich die Durchtrittsrate des Wasserstoffs erhöht und mehr atomarer Wasserstoff gewonnen wird.

Das Verfahren zur Gewinnung von atomarem Wasserstoff kann weiterhin den Schritt des Bestrahlen der semipermeablen Membran, insbesondere der Oberfläche der Membran, die in Kontakt mit dem Rohgas ist, mit Licht der Wellenlänge von 300 nm bis 900 nm, insbesondere von 350 nm bis 850 nm, wie 400 nm bis 800 nm, umfassen. Es hat sich gezeigt, dass sich durch das Bestrahlen der Membran mit Licht die Durchtrittsrate des Wasserstoffs erhöht und so vorteilhafterweise mehr atomarer Wasserstoff gewonnen werden kann. Dies könnte daran liegen, dass durch das Bestrahlen mit Licht der molekulare Wasserstoff einfacher an der Oberfläche der Membran zu atomarem Wasserstoff dissoziiert und mehr atomarer Wasserstoff von der Membran adsorbiert wird. Beim Austritt aus der Membran assoziieren dann mehr Protonen mit jeweils einem Elektron und es bildet sich mehr atomarer Wasserstoff. Die semipermeable Membran kann mit für das menschliche Auge sichtbarem Licht bestrahlt werden. Sichtbares Licht weist einen Wellenlängenbereich von 400 nm bis 780 nm auf. Sichtbares Licht kann einfach mit einer künstlichen Lichtquelle, wie einer Halogenlampe oder einer Glühlampe, erzeugt werden. Die semipermeable Membran kann mit Sonnenlicht bestrahlt werden. Der Wellenlängenbereich von Sonnenlicht schließt den Wellenlängenbereich von sichtbarem Licht mit ein. Vorteilhaft an der Bestrahlung der Membran mit Sonnenlicht ist, dass Sonnenlicht einfach zur Verfügung steht und keine künstliche Lichtquelle eingesetzt werden muss.

In einem Aspekt betrifft die vorliegende Erfindung aktiven atomaren Wasserstoff erhältlich gemäß einem erfindungsgemäßen Verfahren zur Gewinnung von (re)aktiven atomarem Wasserstoff aus einem Rohgas. Der erfindungsgemäß erhaltene, atomare Wasserstoff kann dabei über eine längere Zeit in Form von atomarem Wasserstoff vorliegen, wie mindestens einen Tag, insbesondere wie mehrere Tage, so dass er einfach zur Verwendung in chemischen Reaktionen verwendet werden kann. Insbesondere ist der gewonnene atomare Wasserstoff einer, der andere Verbindungen, wie Metalloxide reduzieren kann, z.B. Metalloxide zu elementaren Metall.

In einem weiteren Aspekt richtet sich die vorliegende Anmeldung auf ein Verfahren zum Erhalt von elementarem Metall aus Metalloxid mit den Schritten erfolgt:
a. Bereitstellen von erfindungsgemäßem atomarem Wasserstoff oder von atomarem Wasserstoff erhältlich nach dem erfindungsgemäßen Verfahren zur Gewinnung von atomarem Wasserstoff;
b. Inkontaktbringen eines Metalloxids mit dem atomaren Wasserstoff;
c. Umsetzen des atomaren Wasserstoffs mit dem Metalloxid unter Reduktion des Metalloxids zu Metall.

Während ein Metalloxid nicht mit molekularem Wasserstoff reagiert, wurde beobachtet, dass durch das Inkontaktbringen eines Metalloxids mit dem erfindungsgemäß hergestellten Wasserstoff, das Metalloxid zu elementarem Metall reduziert wird. Aus dem atomaren Wasserstoff entsteht dabei zusammen mit dem Sauerstoff des Metalloxids Wasser. Das erfindungsgemäße Verfahren zur Herstellung von elementarem Metall aus dem Metalloxid macht sich somit zu Nutze, dass der erfindungsgemäße atomare Wasserstoff ausreichend stabil ist, um die Reduktion zu ermöglichen.

Das Metalloxid kann eines von einem Metall sein, wo das Metall edler ist als Eisen, dass wesentlicher Bestandteil der semipermeablen Membran ist. In einer Ausführungsform ist das Metalloxid Aluminiumoxid und das elementare Metall elementares Aluminium. Es hat sich gezeigt, dass das erfindungsgemäße Verfahren zur Herstellung von elementarem Metall aus einem Metalloxid hervorragend dazu geeignet ist, elementares Aluminium aus Aluminiumoxid herzustellen.

In einer Ausführungsform des erfindungsgemäßen Verfahrens erfolgt die Bereitstellung des atomaren Wasserstoffs über ein Verfahren mit einem Separator mit semipermeabler Membran, dieser Separator ist leitend mit einem Reaktionsreaktor zur Reduktion des Metalloxids verbunden. Der atomare Wasserstoff wird zum Beispiel im unteren Bereich des Reaktors eingeblasen. Weiterhin kann zum Abführen des entstandenen Wasserdampfs und von nicht umgesetztem Wasserstoff oder molekularem Wasserstoff zum Beispiel am Kopf des Reaktorgefäßes eine Ableitung angeordnet sein. Dieses Gasgemisch kann für andere Anwendungen eingesetzt werden. Ein Recycling des atomaren Wasserstoffs unter Rückführung in den Einblasbereich ist möglich.

Weiterhin umfasst eine Ausführungsform des erfindungsgemäßen Verfahrens den Schritt, dass das Metalloxid kontinuierlich oder diskontinuierlich dem Reduktionsbereich mit dem atomaren Wasserstoff insbesondere über eine gasdichte Schleuse unter Inertgas, wie Stickstoff zugeführt wird. Als Inertgas kann zum Beispiel Stickstoff eingesetzt werden. Durch das Inertgas wird verhindert, dass sich der atomare Wasserstoff mit zum Beispiel Sauerstoff zu Wasser umsetzt. Als Schleuse kann zum Beispiel eine Zellenradschleuse genutzt werden.

Schließlich ist das erfindungsgemäße Verfahren eines, wobei das reduzierte Metall in liquider Form im Reaktionsreaktor vorliegt. Das heißt der Reaktor ist so temperiert, dass das elementare Metall, wie Aluminium, in flüssiger Form vorliegt, um entsprechend weiter verarbeitet zu werden.

Im Stand der Technik werden durch Einsatz von aufwändigen Kohle- und oder Elektrolyse-Reduktionsverfahren Metalloxide zu elementarem Metall reduziert. Erfindungsgemäß kann dieses nun einfach und kostengünstig erfolgen. Es wird erfindungsgemäß ein Teil des Seperatorenergieverbrauchs durch bei der Reduktion eingespart und es kann bei deutlich niedrigeren Temperaturen gearbeitet werden. Dazu kommt noch eine deutliche CO₂-Einsparung.

Der erfindungsgemäß erhaltene atomare Wasserstoff kann auch auf anderen Bereichen eingesetzt werden. Entsprechende Bereiche schließen die Chemie-, Lebensmittel- und Erdölverarbeitende Industrie ein. Atomarer Wasserstoff kann als energieeffizienter Rohstoff eingesetzt werden.

Schließlich wird die Verwendung des erfindungsgemäßen Verfahrens und der entsprechenden Separatoren zur Gewinnung von (re)aktiven atomaren Wasserstoff beschrieben.

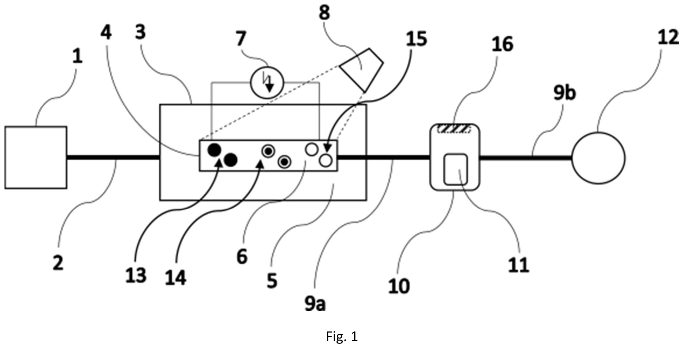

Die Fig. 1 zeigt eine schematische Darstellung einer Versuchsanordnung zum Nachweis der Gewinnung von atomarem Wasserstoff.

In einem Rohgasbehälter 1 befindet sich ein Rohgas. Durch eine Rohgaszuleitung 2 wird das Rohgas aus dem Rohgasbehälter 1 in einen ersten Reaktionsraum 5 des Separators geleitet.

In dem Separator 3 ist eine semipermeable Membran 4 angeordnet, die den ersten Reaktionsraum 5 von einem zweiten Reaktionsraum 6 trennt. Die semipermeable Membran 4 ist mit einer Spannungsquelle 7 elektrisch leitend verbunden.

Zur Belichtung der Oberfläche der semipermeablen Membran 4 ist eine Lichtquelle 8 angeordnet. Aus Gründen der Darstellung ist eine Lichtquelle 8 dargestellt, die nur einen Teil der Oberfläche der semipermeablen Membran 4 belichtet. Es ist jedoch so zu verstehen, dass die gesamte Oberfläche der semipermeablen Membran 4 durch die Lichtquelle 8 belichtet wird. Der Lichtkegel der Lichtquelle ist schematisch durch gestrichelte Linien dargestellt.

In dem zweiten Reaktionsraum 6 sind Metalloxid-Kugeln 13 bereitgestellt. Sofern sich mit der Versuchsanordnung atomarer Wasserstoff aus dem Rohgas gewinnen lässt, ist zu erwarten, dass die Metalloxid-Kugeln 13 zu Metall-Metalloxid-Kugeln 14 reduziert werden. Dabei kann eine die Kugel mit einer äußeren Schicht elementarem Metall und einem Metalloxid-Rest, oder komplett zu Metall-Kugeln 15 aus elementarem Metall reduziert werden. Das Größenverhältnis und die Anzahl der Metalloxid-Kugeln, der Metall-Metalloxid-Kugeln und der Metall-Kugeln ist in der Darstellung lediglich schematisch abgebildet.

Der zweite Reaktionsraum 6 ist durch eine Wasserstoffableitung 9a, 9b mit einem Schauglasbehälter 10 und einer Vakuumpumpe 12 verbunden. In dem Schauglasbehälter 10 befindet sich ein Messgerät 11 zur Messung der Wasserstoffkonzentration.

Zum Nachweis der Gewinnung von atomarem Wasserstoff mit Hilfe der Versuchsanordnung enthält der Rohgasbehälter 1 ein Rohgas, das ein Gasgemisch aus 50 Vol.% Stickstoff (N₂) und 50 Vol.% molekularem Wasserstoff (H₂) ist.

Die Außenwand des Separators 3 ist in dieser Versuchsanordnung ein Quarzglasrohr.

Die semipermeable Membran 4 ist in dieser Versuchsanordnung als Rohr ausgebildet und besteht aus Reineisen. Die Oberfläche der semipermeablen Membran 4 wurde vor dem Versuch mit einem materialabtragenden Verfahren strukturiert.

Die semipermeable Membran 4 wird durch Anlegen einer Wechselspannung durch die Spannungsquelle 7 mit 4,5 V bestromt, so dass ein Strom von 120 A fließt. Durch die Bestromung wird die semipermeable Membran 4 bis zum Rotglühen erhitzt. Dies entspricht einer Temperatur von ca. 500 °C. Die Oberfläche der semipermeablen Membran 4 wird mit einer 60 W Halogenleuchte als Lichtquelle 8 belichtet.

In dem zweiten Reaktionsraum 6 wurden in einem ersten Versuchslauf zunächst keine Metalloxid-Kugeln 13 bereitgestellt. Durch die Vakuumpumpe 12 wird der zweite Reaktionsraum 6, die Wasserstoffableitung 9a, 9b und der Schaugasbehälter 10 mit einem relativen Vakuum von 67 % beaufschlagt. Dies entspricht einem Restdruck von ca. 0,3 bar.

Das Messgerät 11 zeigte unmittelbar nach Beginn der Separation Wasserstoff in dem Gas an.

### Versuch mit Metalloxid im zweiten Reaktionsraum:

In einem zweiten Versuchslauf wurde in den zweiten Reaktionsraum 6 Metalloxid-Kugeln 13 in Form von Aluminiumoxid-Kugeln (Al₂O₃) mit einem Durchmesser von 0,5 mm gegeben. Der Versuch wurde analog zu den obigen Bedingungen erneut gestartet.

Über eine Zeit von 2 Stunden war mit dem Messgerät 11 kein Wasserstoff messbar. Es wurde jedoch Wasserdampfkondensat 16 im Schaugasbehälter 10 beobachtet.

Nach dem Ende des Versuchs wurde festgestellt, dass sich auf den Aluminiumoxid-Kugeln eine Schicht elementares Aluminium gebildet hat. Darüber hinaus bildete sich Wasser aus dem Sauerstoff und dem Wasserstoff.

Während Aluminiumoxid durch molekularen Wasserstoff (H₂) nicht reduziert werden kann, ist atomarer Wasserstoff (H) dazu in der Lage.

Aufgezeigt wird die Bildung des atomaren Wasserstoffs mit dem erfindungsgemäßen Verfahren und die Reduktion von Metalloxid zum elementaren Metall.

In einem weiteren Versuch wurde festgestellt, dass ein erfindungsgemäß hergestelltes Wasserstoffgas, das über ein oder mehrere Tage in einem Druckbehälter aufbewahrt wurde, weiterhin ein Metalloxid zu elementarem Metall und Bildung von Wasser reduzieren kann. Es lag mithin weiterhin atomarer Wasserstoff in dem separierten Wasserstoffgas vor.

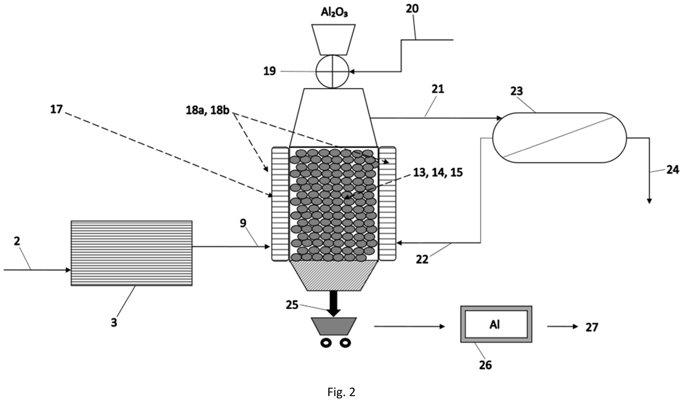

Fig.2 zeigt den Aufbau einer Anlage zur Metallreduktion mit vorgeschaltetem Separator zur Gewinnung von atomarem Wasserstoff.

Dabei wird über die Rohgaszuleitung 2 Rohgas zu dem Separator 3 zugeführt. Im Separator 3 erfolgt die Erzeugung und Separation des atomaren Wasserstoffs wie auch von molekularem Wasserstoff. Dieser separierte Wasserstoff wird über die Ableitung 9 in den Reaktionsreaktor 17 von unten in den mittleren Bereich des Reaktionsreaktors 17 eingeblasen. Der Reaktionsreaktor 17 weißt mehrere Bereiche auf, den oberen, mittleren und unteren Bereich. Der untere Bereich ist so ausgebildet, dass elementares Metall, wie flüssiges Aluminium aufgenommen und zur Weiterverarbeitung durch die Ableitung 25 aus dem Reaktor entnommen werden kann. Dieses Aluminium kann dann z.B. in einen Brammenform 26 gegossen und anschließend zu ein Halbzeug 27 weiterverarbeitet werden.

Aluminiumoxid als ein Beispiel für ein Metalloxid wird dem Reaktionsreaktor 17 über eine Schleuse 19, wie eine Zellenradschleuse zugeführt. Dazu wird zum Entzug von Sauerstoff aus der Luft, in der Schleuse 19 das Metalloxid mit Inertgas, wie Stickstoff gespült, Stickstoff wird über die Zuleitung 20 in die Schleuse eingeleitet.

Im Reaktionsreaktor 17 findet sich das Metalloxid als solches oder entsprechend in Mischform von Metalloxid und Metall sowie als elementares Metall 13, 14, 15. Der Reaktionsreaktor 17 wird mit Heizelementen 18 beheizt, um das elementare Metall zu verflüssigen. Das verflüssigte Metall gelangt dann in den unteren Bereich des Reaktionsreaktors 17.

Das eingeblasene Gas, der Wasserstoff mit atomarem Wasserstoff, wird im oberen Bereich über die Ableitung 21 zusammen mit gebildetem Wasserdampf abgezogen und einem Kühler und Wärmetauscher 23 zur Wasserabscheidung zugeführt. Das Wasser wird über die Ableitung 24 abgeleitet. Der Wasserstoff kann über die Leitung 22 dem Reaktionsreaktor wieder zugeführt werden.

### Beispiel:

Nachweis von reaktivem atomarem Wasserstoff erhalten mit dem erfindungsgemäßen Verfahren:
Ein erfindungsgemäß abgeschiedener Wasserstoff mit einer Reinheit von über 99% wurde in eine Kaliumpermanganatlösung geleitet. Die Lösung bestand aus 100ml destilliertes Wasser und 0,05g Kaliumpermanganatlösung (1%). Der aus dem zweiten Reaktionsraum erhaltene Reingasstrom wurde durch die Lösung geleitet. Es wurde die Entfärbung der Lösung beobachtet. Bei einer Kontrolllösung bei der durch die beschriebene Kaliumpermanganatlösung molekularer Wasserstoff geleitet wurde oder das Ausgangsgas geleitet wurde, konnte keine Entfärbung beobachtet werden. Die Reduktion der Kaliumpermanganats erfolgt allerdings nur durch reaktiven atomaren Wasserstoff und nicht durch molekularen Wasserstoff. Es konnte gezeigt werden, dass ein überraschend langlebiger atomarer Wasserstoff mit dem erfindungsgemäßen Verfahren gewonnen werden kann.

### Bezugszeichenliste

- 1: Rohgasbehälter
- 2: Rohgaszuleitung
- 3: Separator
- 4: semipermeable Membran
- 5: erster Reaktionsraum
- 6: zweiter Reaktionsraum
- 7: Spannungsquelle
- 8: Lichtquelle
- 9, 9a, 9b: Wasserstoffableitung
- 10: Schauglasbehälter
- 11: Messgerät
- 12: Vakuumpumpe
- 13: Metalloxid-Kugeln
- 14: Metall-Metalloxid-Kugeln
- 15: Metall-Kugeln
- 16: Wasserdampfkondensat
- 17: Reaktionsreaktor
- 18, 18a, 18b: Heizelemente
- 19: Zellenradschleuse
- 20: Zuleitung Inertgas
- 21: Ableitung Wasserdampf und Wasserstoff
- 22: Rücklauf Wasserstoff
- 23: Kühler/Wärmetauscher
- 24: Ableitung Wasser
- 25: Ableitung elementares Metall
- 26: Brammenform
- 27: Halbzeug

## Patentansprüche

1. Verfahren zur Gewinnung von atomarem Wasserstoff aus einem Rohgas enthaltend molekularen Wasserstoff umfassend die Schritte:
a. Bereitstellen eines Separators (3) mit einer für Wasserstoff semipermeablen Membran (4) aus einem für Wasserstoff durchlässigen Metall oder einer für Wasserstoff durchlässigen Metalllegierung wobei das Metall ein Roheisen umfasst, und wobei die Membran (4) zwei Reaktionsräume (5,6) im Separator (3) voneinander trennt;
b. Einleiten des Rohgases enthaltend molekularen Wasserstoff in den ersten Reaktionsraum (5);
c. Abscheiden von Wasserstoff durch die semipermeable Membran (4) aus dem ersten Reaktionsraum (5) in den zweiten Reaktionsraum (6), wobei molekularer Wasserstoff aus dem ersten Reaktionsraum (5) durch die Membran (4) in den zweiten Reaktionsraum (6) als atomarer Wasserstoff austritt und dort als atomarer Wasserstoff, insbesondere reaktionsfähiger atomarer Wasserstoff, vorliegt;
d. Gegebenenfalls, Abführen (9) von atomarem Wasserstoff aus dem zweiten Reaktionsraum.

2. Verfahren nach Anspruch 1, **dadurch gekennzeichnet, dass** das für Wasserstoff durchlässige Metall Roheisen, bevorzugter Weise ferritisches Eisen, noch bevorzugter Weise Reineisen enthält, insbesondere daraus besteht.

3. Verfahren nach einem der vorhergehenden Ansprüche, **dadurch gekennzeichnet, dass** die für Wasserstoff semipermeable Membran (4) eine strukturierte Oberfläche aufweist, die derart ausgebildet ist, dass i) die Durchtrittsdicke der semipermeablen Membran (4) für den Wasserstoff verringert ist und ii) die Grenzfläche zwischen dem Rohgas und der semipermeablen Membran (4) und/oder die Grenzfläche zwischen dem atomaren Wasserstoff und der semipermeablen Membran (4) vergrößert ist.

4. Verfahren nach einem der vorhergehenden Ansprüche, **gekennzeichnet durch** Speichern des atomaren Wasserstoffs in einem Druckbehälter.

5. Verfahren nach einem der vorhergehenden Ansprüche, **gekennzeichnet durch**, Beaufschlagen des ersten Reaktionsraums (5) mit einem Überdruck und/oder Beaufschlagen des zweiten Reaktionsraums (6) mit einem Unterdruck, insbesondere mit einem Vakuum.

6. Verfahren nach einem der vorhergehenden Ansprüche, **gekennzeichnet durch**, zumindest von zeitweise, wie zumindest zeitweise zu Beginn des Verfahrens Anlegen einer elektrischen Spannung an die semipermeable Membran (4).

7. Verfahren nach einem der vorhergehenden Ansprüche, **gekennzeichnet durch**, zumindest zeitweise Erhitzen, wie zumindest zeitweise zu Beginn des Verfahrens, der semipermeablen Membran (4) auf eine Temperatur von 400°C bis 1.100°C, wie 500° bis 1.000°C, insbesondere durch elektrische Energie.

8. Verfahren nach einem der vorhergehenden Ansprüche, **gekennzeichnet durch**, Bestrahlen der semipermeablen Membran (4), insbesondere der Oberfläche der Membran die in Kontakt mit dem Rohgas ist, mit Licht der Wellenlänge von 300 nm bis 900 nm, insbesondere von 350 nm bis 850 nm, wie 400 nm bis 800 nm.

9. Atomarer Wasserstoff erhältlich durch ein Verfahren zur Gewinnung von atomarem Wasserstoff aus einem Rohgas nach einem der Ansprüche 1 bis 8.

10. Verfahren zum Erhalt von elementarem Metall aus seinem Metalloxid, umfassend die Schritte:
a. Bereitstellen von atomarem Wasserstoff nach Anspruch 9 oder erhältlich nach einem Verfahren zur Gewinnung von atomarem Wasserstoff gemäß einem der Ansprüche 1 bis 8;
b. Inkontaktbringen des Metalloxids mit dem atomaren Wasserstoff;
c. Umsetzen des atomaren Wasserstoffs mit dem Metalloxid unter Reduktion des Metalloxids zum Metall.

11. Verfahren nach Anspruch 10, **dadurch gekennzeichnet, dass** das Metalloxid ein edleres Metall als Eisen ist.

12. Verfahren nach Anspruch 10 oder 11, **dadurch gekennzeichnet, dass** das Metalloxid Aluminiumoxid ist und das elementare Metall elementares Aluminium ist.

13. Verfahren nach einem der Ansprüche 10 bis 12 wobei die Bereitstellung des atomaren Wasserstoffs über ein Verfahren mit einem Separator (3) mit semipermeabler Membran (4) erfolgt, dieser Separator (3) ist leitend mit einem Reaktionsreaktor (17) zur Reduktion des Metalloxids verbunden.

14. Verfahren nach einem der vorherigen Ansprüche, wobei das Metalloxid kontinuierlich oder diskontinuierlich dem Reduktionsbereich mit dem atomaren Wasserstoff insbesondere über eine gasdichte Schleuse (19) unter Inertgas, wie Stickstoff zugeführt wird.

15. Verfahren nach einem der vorherigen Ansprüche, wobei das reduzierte Metall in liquider Form im Reaktionsreaktor (17) vorliegt.
